# EUROPÄISCHE PATENTSCHRIFT

(11) **EP 2 796 793 B1**
(45) Veröffentlichungstag und Bekanntmachung des Hinweises auf die Patenterteilung: **10.06.2020**
(21) Anmeldenummer: 14164206.6
(22) Anmeldetag: 10.04.2014
(51) Int. Cl.: F24C 15/20, G02B 6/00, F21V 8/00

(54) **Dunstabzugshaube**
Extractor hood
Hotte aspirante

(30) Priorität: 22.04.2013 DE 102013207262
(43) Veröffentlichungstag der Anmeldung: 29.10.2014
(73) Patentinhaber: BSH Hausgeräte GmbH, 81739 München (DE)
(72) Erfinder: Grobleben, Ralf, 75015 Bretten (DE); Leinmüller, Elena, 85521 Ottobrunn (DE); Schmidt, Tobias, 81371 München (DE)

(56) Entgegenhaltungen:
- WO-A2-2004/068453
- DE-A1- 10 229 064
- DE-A1- 10 347 763
- DE-A1- 19 514 649
- DE-A1-102006 048 415
- DE-U1-202008 003 054

## Beschreibung

Dunstabzugshauben werden zur Absaugung des Wrasens über einem Haushaltsgerät wie beispielsweise einem Küchenherd eingesetzt. Eine derartige Dunstabzugshaube weist zumeist ein Anzeigeelement auf, welches beispielsweise dazu dient, die eingestellte Gebläsestufe oder sonstige Betriebszustände der Dunstabzugshaube anzuzeigen. Die Flexibilität derartiger Anzeigeelemente ist allerdings hinsichtlich der Darstellbarkeit unterschiedlichster Anzeigen und Anzeigenabmessungen begrenzt.

Die DE 10 2006 048 415 A1 beschreibt eine Dunstabzugshaube mit einem Lichtleitelement, auf dessen Rückseite ein Logo eingraviert ist. Das durch das Lichtleitelement geleitete Licht bricht sich an der Gravur, wodurch das Logo für einen Betrachter heller erscheint als das umgebende Material.

Die DE 103 47 763 A1 zeigt eine Haushaltsgeräteeinheit mit einer Türscheibe, die ein optisches Funktionsmittel aufweist. Das optische Funktionsmittel ist ein mit Hilfe eines gepulsten Lasers in die Türscheibe eingebrachter Lichtstreubereich.

Die DE 102 29 064 A1 beschreibt ein Bauelement, in das ein Lichtquellenelement so integriert ist, dass dreidimensionale lichtstreuende Hohlstrukturen mittels einer Lasertechnik in einer im Bauelement vorhandenen Glasplatte erzeugt werden und die Lichtquelle seitlich an der Glasplatte angeordnet ist.

Vor diesem Hintergrund besteht eine Aufgabe der vorliegenden Erfindung darin, eine verbesserte Dunstabzugshaube zu schaffen.

Demgemäß wird eine Dunstabzugshaube mit einer Blende, welche eine Struktur aufweist, vorgeschlagen. Die Dunstabzugshaube weist ferner eine Lichtquelle auf, wobei Licht der Lichtquelle in die Blende einkoppelbar und über die Struktur aus der Blende auskoppelbar ist, wobei die die Anzahl von Strukturelementen der Struktur pro Volumeneinheit des Materials der Blende so variiert, dass ein Dichtegradient der Strukturelemente vorgesehen ist, wobei die Dichte der Strukturelemente von einem Einleitpunkt des Lichts in die Blende hin zu einem Ausleitpunkt des Lichts aus der Blende zunimmt und wobei die Lichtquelle mit Hilfe eines abschnittsweisen Ein- oder Ausschaltens geeignet ist, je nach einem Betriebszustand der Dunstabzugshaube die Struktur lediglich abschnittsweise zu beleuchten.

Die Lichtquelle ist dazu eingerichtet, Licht in die Blende einzuleiten. Die Blende weist ein lichtleitendes, insbesondere transparentes, Material auf. Das Licht wird in der Blende geleitet, bis es auf die Struktur trifft. Die Struktur kann die Form eines Schriftzuges, eines beliebigen Musters und/oder verschiedenster Symbole aufweisen. Die Struktur reflektiert das Licht und lenkt es ab, wodurch das Licht zumindest teilweise aus der Blende wieder ausgekoppelt wird. Hierdurch wird die Struktur zumindest teilweise für einen Benutzer sichtbar. Die Lichtquelle ist dazu geeignet die Struktur derart zu beleuchten, dass unterschiedliche Motive, wie beispielsweise Symbole für verschiedene Betriebszustände der Dunstabzugshaube, darstellbar sind. Dies ist beispielsweise durch partielle Beleuchtung der Struktur erreichbar. Insbesondere kann in einem ersten Betriebszustand der Dunstabzugshaube lediglich ein bestimmter Abschnitt der Struktur beleuchtet werden, der einem den ersten Betriebszustand der Dunstabzugshaube beschreibenden Symbol entspricht. Ferner kann durch teilweises Dimmen der Lichtquelle und/oder durch Ändern der Lichtfarbe der Lichtquelle eine atmosphärische bewegte Illumination der Blende erzeugt werden. Die Größe der Struktur ist beliebig und lediglich durch die Abmessungen der Blende begrenzt. Auf ein zusätzliches Anzeigeelement kann somit verzichtet werden.

Gemäß einer Ausführungsform ist die Blende eine Frontplatte der Dunstabzugshaube.

Hierdurch kann ein sich vor der Dunstabzugshaube befindender Benutzer die beleuchtete Struktur gut einsehen.

Gemäß einer weiteren Ausführungsform ist die Blende eine Glasplatte.

Die Glasplatte ist dazu geeignet, das Licht der Lichtquelle zu leiten. Die Glasplatte kann eingefärbt sein. Die Glasplatte weist insbesondere ein bruchsicheres Glasmaterial auf. Das in die Glasplatte eingeleitete Licht der Lichtquelle wird an den Oberflächen der Glasplatte reflektiert und so in der Glasplatte geleitet.

Gemäß einer weiteren Ausführungsform ist die Struktur eine Lasergravur.

Dies ermöglicht eine besonders flexible, effiziente und genaue Herstellung der Struktur. Die Struktur weist vorzugsweise zahlreiche einzelne, insbesondere dreidimensionale, Strukturelemente auf, die bevorzugt durch ein Lasergravurverfahren in die Blende eingebracht werden.

Gemäß einer weiteren Ausführungsform ist die Struktur eine Kugelstruktur.

Hierdurch ergibt sich eine optische Darstellung mit Tiefenwirkung, insbesondere mit einer dreidimensionalen Anmutung. Die Struktur ist aus einer Vielzahl Kugeln als Strukturelemente aufgebaut, die beispielsweise ein Symbol, einen Schriftzug oder ein Muster bilden. Die Struktur kann alternativ aus beliebigen Strukturelementen, wie beispielsweise Bläschen, Prismen, Zylindern, Quadern, Würfeln, Tetraedern oder dergleichen aufgebaut sein. Die Dichte der Strukturelemente, d.h. die Anzahl der Strukturelemente pro Volumeneinheit des Materials der Blende variiert. Insbesondere kann ein Dichtegradient vorgesehen sein. Erfindungsgemäß ist hierunter zu verstehen, dass die Dichte der Strukturelemente, insbesondere der Kugeln, ausgehend von einem Einleitpunkt des Lichts der Lichtquelle in die Blende hin zu einem Ausleitpunkt des Lichts aus der Blende zunimmt. Hierdurch kann eine Abnahme der Lichtintensität über den von dem Licht in der Blende zurückgelegten Weg ausgeglichen werden. Die Strukturelemente sind vorzugsweise in verschiedenen Tiefen bezüglich einer Oberfläche oder Sichtfläche der Blende angeordnet.

Gemäß einer weiteren Ausführungsform weist die Kugelstruktur unterschiedlich große Kugeln auf.

Die Größe der Kugeln oder beliebigen Strukturelemente kann frei variieren. Es kann ein Größengradient vorgesehen sein, d.h. die Größe der Strukturelemente oder Kugeln variiert über den Verlauf der Struktur. Beispielsweise kann die Größe der Strukturelemente ausgehend von einem Einleitpunkt des Lichts in die Blende hin zu einem Ausleitpunkt des Lichts aus der Blende zunehmen. Hierdurch kann die Abnahme der Lichtintensität beim Leiten des Lichts durch die Blende ausgeglichen werden, da größere Strukturelemente aufgrund ihrer größeren reflektierenden Oberfläche mehr Licht aus der Blende auskoppeln als kleine Strukturelemente.

Gemäß einer weiteren Ausführungsform ist die Struktur in der Blende angeordnet.

Die Struktur ist unter einer Oberfläche, insbesondere unter einer Sichtfläche, der Blende angeordnet. Hierdurch kann die Struktur nicht verschmutzen und die Blende kann leicht gereinigt werden. Alternativ kann die Struktur in die Oberfläche der Blende eingebracht, beispielsweise eingelasert sein.

Gemäß einer weiteren Ausführungsform ist das Licht der Lichtquelle über eine Kante der Blende in diese einkoppelbar.

Das Licht ist bevorzugt über eine Unterkante der Blende in diese einkoppelbar. Insbesondere wird das Licht außerhalb eines Sichtbereichs der Blende in diese eingekoppelt.

Gemäß einer weiteren Ausführungsform weist die Dunstabzugshaube zum Einkoppeln des Lichts der Lichtquelle in die Blende eine Lichtleiteinrichtung auf.

Die Lichtleiteinrichtung ist bevorzugt an einer Unterkante der Blende angeordnet. Die Lichtleiteinrichtung kann ein Diffusor sein, der eine gleichmäßige Lichtverteilung über eine gesamte Breite einer Kante der Blende ermöglicht. Die Lichtleiteinrichtung weist bevorzugt ein transparentes Material wie beispielsweise Polycarbonat auf.

Gemäß einer weiteren Ausführungsform weist die Lichtquelle zumindest eine lichtemittierende Diode auf.

Die lichtemittierende Diode oder LED kann unmittelbar an der Blende angeordnet oder mittels einer Lichtleiteinrichtung mit der Blende wirkverbunden sein. Ist die Lichtleiteinrichtung als Diffusor ausgebildet, wird eine homogene Verteilung des Lichts der lichtemittierenden Diode erzielt. Wird auf einen Diffusor verzichtet, so kann eine punktförmige Beleuchtung der Struktur erzielt werden. Vorzugsweise weist die Lichtquelle eine Vielzahl lichtemittierender Dioden auf. Insbesondere können die lichtemittierenden Dioden einzeln angesteuert werden.

Gemäß einer weiteren Ausführungsform ist die Lichtquelle dimmbar.

Vorzugsweise ist die Lichtquelle abschnittsweise dimmbar. Weist die Lichtquelle beispielsweise mehrere lichtemittierende Dioden auf, so können einzelne lichtemittierende Dioden wechselweise gedimmt werden, um so eine bewegte Illumination der Blende zu erzielen.

Gemäß einer weiteren Ausführungsform ist eine Lichtfarbe der Lichtquelle veränderbar.

Hierdurch können beispielsweise unterschiedlichen Betriebszuständen der Dunstabzugshaube unterschiedliche Farben zugeordnet werden. Dies erhöht den Bedienkomfort.

Die Lichtquelle ist geeignet, je nach einem Betriebszustand der Dunstabzugshaube die Struktur lediglich abschnittsweise zu beleuchten.

Hierdurch kann jeweils ein einem entsprechenden Betriebszustand der Dunstabzugshaube zugeordneter Abschnitt der Struktur, wie beispielsweise ein Symbol, partiell beleuchtet werden. Hierzu ist die Lichtquelle abschnittsweise ein-oder ausschaltbar.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine schematische Ansicht einer bevorzugten Ausführungsform einer Dunstabzugshaube;
Fig. 2 zeigt eine schematische Aufsicht der Dunstabzugshaube gemäß Fig. 1;
Fig. 3 zeigt eine schematische Vorderansicht der Dunstabzugshaube gemäß Fig. 1;
Fig. 4 zeigt eine schematische Teilschnittansicht einer Blende der Dunstabzugshaube gemäß Fig. 1; und
Fig. 5 zeigt eine weitere schematische Teilschnittansicht der Blende der Dunstabzugshaube gemäß Fig. 1.

In den Figuren sind gleiche oder funktionsgleiche Elemente mit denselben Bezugszeichen versehen worden, sofern nichts anderes angegeben ist.

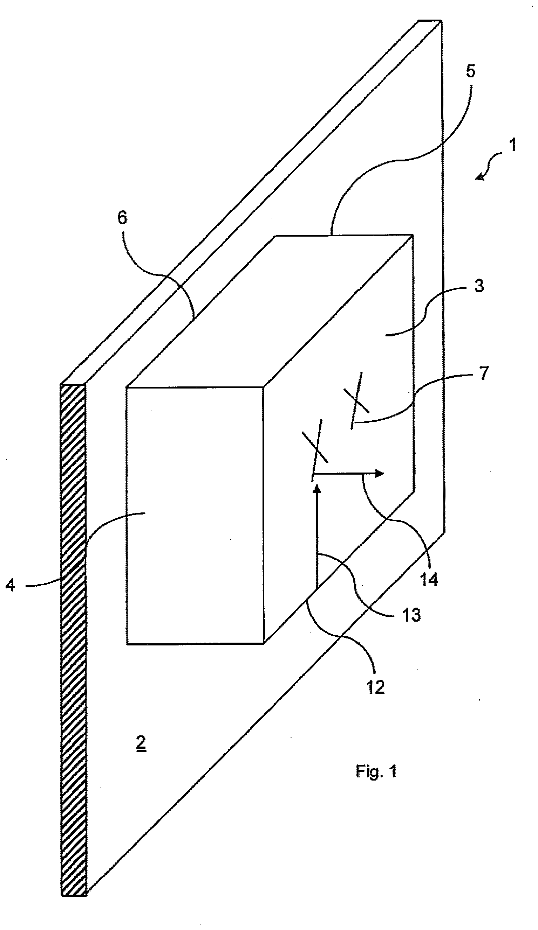

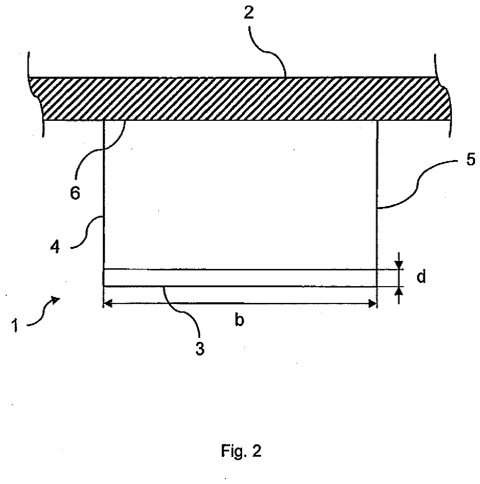

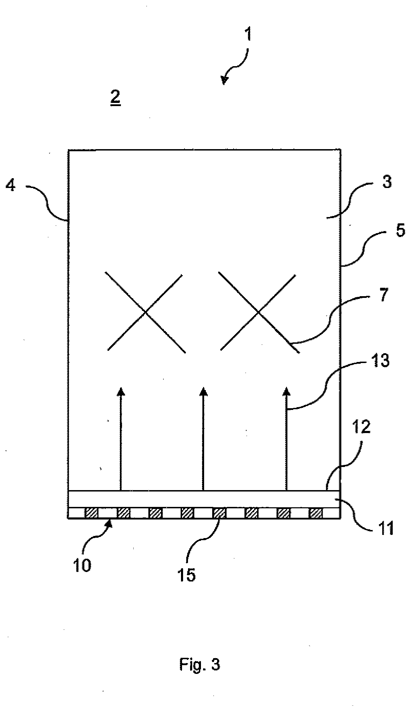

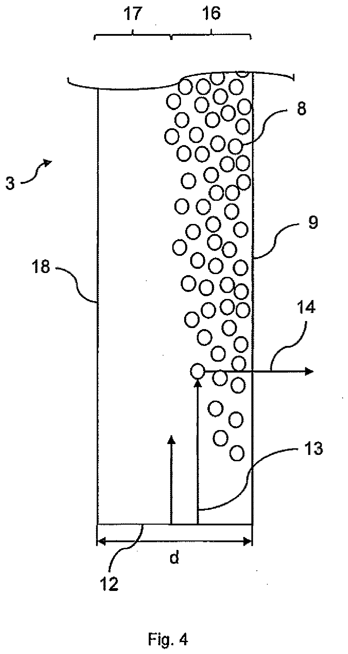

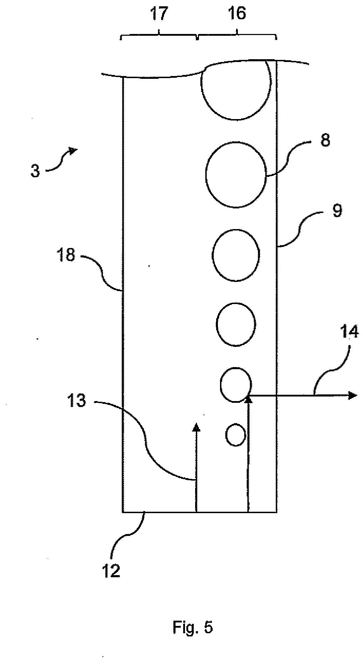

In der Figur 1 ist eine perspektivische Ansicht einer Dunstabzugshaube dargestellt. Die Figur 2 zeigt eine schematische Aufsicht der Dunstabzugshaube. Die Figur 3 illustriert eine schematische Vorderansicht der Dunstabzugshaube. Die Figuren 4 und 5 zeigen schematische Teilschnittansichten einer Blende der Dunstabzugshaube. Im Folgenden wird auf die Figuren 1 bis 5 gleichzeitig Bezug genommen.

Eine Dunstabzugshaube 1 weist eine Quaderform auf und ist an einer Gebäudewand 2 montiert. Die Dunstabzugshaube 1 weist eine vordere Blende 3 und zwei seitliche Blenden 4, 5 auf. Eine Rückwand 6 der Dunstabzugshaube 1 liegt an der Gebäudewand 2 an und ist mit dieser beispielsweise verschraubt. Die vordere Blende 3 ist insbesondere eine Frontplatte der Dunstabzugshaube 1. Die seitlichen Blenden 4, 5 bilden Seitenwände der Dunstabzugshaube 1.

Die vordere Blende 3 ist insbesondere eine Glasplatte. Die Blende 3 weist eine Breite b, die einer Breite der Dunstabzugshaube 1 entspricht, und eine Dicke d auf. Die Dicke d beträgt beispielsweise einige Millimeter. Vorzugsweise ist die Glasplatte mit einem hochfesten Glaswerkstoff gebildet.

Die Blende 3 weist eine Struktur 7 auf. Die Struktur 7 ist beispielsweise als Symbol, Muster, Beschriftung oder dergleichen ausgebildet. Die Struktur 7 weist eine beliebige Anzahl an dreidimensionalen Strukturelementen 8 auf. Die Strukturelemente 8 können unterschiedliche Größen aufweisen. Die Strukturelemente 8 sind benachbart zueinander angeordnet. Die einzelnen Strukturelemente 8 können beispielsweise als Kugeln, Prismen, Bläschen, Tetraeder, Zylinder oder dergleichen ausgebildet sein. Vorzugsweise ist die Struktur 7 eine Lasergravur. Durch die Anwendung eines Lasers zur Herstellung der Struktur 7 ergibt sich eine hohe Flexibilität bei der Variantenerzeugung der Struktur 7.

Die Struktur 7 ist vorzugsweise in der Blende 3 angeordnet, das heißt die Struktur 7 ist unter einer Sichtfläche oder Oberfläche 9 der Blende 3 in diese eingebracht. Vorzugsweise ist die Struktur 7 unmittelbar unter der Oberfläche 9 in die Blende 3 eingebracht. Die Oberfläche 9 ist daher glatt und die Struktur 7 ist vor Verschmutzung, Abnutzung und Beschädigung geschützt. Alternativ kann die Struktur 7 direkt in die Oberfläche 9 eingebracht sein, d.h. die Oberfläche 9 ist dann rau.

Die Dunstabzugshaube 1 weist ferner eine Lichtquelle 10 auf, die dazu ausgestaltet ist, Licht in die Blende 3 einzukoppeln. Das Licht der Lichtquelle wird beispielsweise über eine Lichtleiteinrichtung 11 in die Blende 3 eingekoppelt. Die Lichtleiteinrichtung 11 kann beispielsweise als Diffusor ausgebildet sein. Die Lichtleiteinrichtung 11 ist vorzugsweise mit einem transparenten Material wie Polycarbonat gebildet. Alternativ kann die Lichtquelle 10 direkt an der Blende 3 angebracht sein. Vorzugsweise ist die Lichtquelle 10 oder sind die Lichtquelle 10 und die Lichtleiteinrichtung 11 an einer unteren Kante 12 der Blende 3 vorgesehen. Die Lichtquelle 10 erstreckt sich vorzugsweise über die gesamte Breite b der Blende 3.

Das Licht der Lichtquelle 10 wird in die Blende 3 eingekoppelt und in der Blende 3 in einer ersten Lichtleitrichtung 13 auf die Struktur 7 geleitet. Die erste Lichtleitrichtung 13 ist in einem Winkel von 90° relativ zu der Unterkante 12 orientiert. Unter einem Winkel von 90° ist zu verstehen, dass der Winkel 90° ± 10°, bevorzugt 90° ± 5°, weiter bevorzugt 90° ± 1° beträgt. An der Struktur 7 bzw. an den Strukturelementen 8 wird das Licht der Lichtquelle 10 reflektiert und in einer zweiten Lichtleitrichtung 14 aus der Blende 3 ausgekoppelt. Die zweite Lichtleitrichtung 14 ist in einem Winkel von 90° relativ zu der Oberfläche 9 der Blende 3 orientiert.

Ein Dichtegradient der Struktur 7, das heißt die Anzahl an Strukturelementen 8 pro Volumeneinheit des Materials der Blende 3 kann, wie in Figur 4 gezeigt, in der Lichtleitrichtung 13 variieren. In Figur 4 sind die Größenverhältnisse nicht maßstabsgerecht dargestellt. Beispielsweise nimmt die Anzahl der Strukturelemente 8 pro Volumeneinheit in der Lichtleiteinrichtung 13 ausgehend von dem Lichteinleitpunkt, der Unterkante 12, zu. Hierdurch können Verluste des Lichts beim Leiten des Lichts durch die Blende 3 ausgeglichen werden, da bei einer höheren Dichte der Strukturelemente 8 mehr Licht aus der Blende 3 ausgekoppelt wird. Die dreidimensionalen Strukturelemente 8 befinden sich in Bezug auf die Oberfläche 9 in unterschiedlichen Abständen zu dieser, wodurch das Auskoppeln des Lichts aus der Blende 3 beeinflussbar ist.

In Richtung der Lichtleitrichtung 13 kann, wie Figur 5 zeigt, zusätzlich oder alternativ ein Größengradient der Strukturelemente 8 vorgesehen sein. Das heißt eine Größe, beispielsweise ein Durchmesser der Strukturelemente 8 nimmt in Richtung der Lichtleitrichtung 13, insbesondere ausgehend von der Unterkante 12 der Blende 3, zu. Größere Strukturelemente 8 koppeln aufgrund ihrer größeren Reflexionsoberfläche mehr Licht aus der Blende 3 aus als kleinere Strukturelemente 8. In Figur 5 sind die Größenverhältnisse nicht maßstabsgerecht dargestellt.

Die Lichtquelle 10 weist zumindest eine lichtemittierende Diode 15 auf. Vorzugsweise weist die Lichtquelle 10 eine Vielzahl derartiger lichtemittierender Dioden 15 auf. Die lichtemittierenden Dioden 15 sind vorzugsweise einzeln ansteuerbar. Die Lichtquelle 10 ist vorzugsweise dimmbar ausgebildet. Insbesondere kann die Lichtquelle, wenn diese mehrere lichtemittierende Dioden 15 aufweist, teilweise gedimmt werden. Hierdurch kann eine bewegte Illumination der Blende 3 erzielt werden.

Vorzugsweise ist eine Lichtfarbe der Lichtquelle 10 zumindest abschnittsweise veränderbar. Hierdurch kann beispielsweise jedem Betriebszustand der Dunstabzugshaube 1 eine bestimmte Farbe der Struktur 7 zugeordnet werden. Dies erhöht den Benutzerkomfort.

Die Dicke d der Blende 3 ist in einen unmittelbar unter der Oberfläche 9 angeordneten ersten Abschnitt 16, in dem die Strukturelemente 8 angeordnet sind, und in einen zweiten, einem Gehäuse der Dunstabzugshaube 1 zugeordneten, Abschnitt 17 aufgeteilt, in dem vorzugsweise keine Strukturelemente 8 vorgesehen sind. Der erste Abschnitt 16 ist durch die Oberfläche 9 und den zweiten Abschnitt 17 begrenzt. Der zweite Abschnitt 17 ist durch den ersten Abschnitt 16 und eine Oberfläche 18 der Blende 3 begrenzt. Mit der Oberfläche 18 steht die Blende 3 in Kontakt mit dem Gehäuse der Dunstabzugshaube 1.

Obwohl die Erfindung vorliegend anhand bevorzugter Ausführungsbeispiele beschrieben wurde, ist sie darauf nicht beschränkt sondern vielfältig modifizierbar.

### Verwendete Bezugszeichen:

- 1: Dunstabzugshaube
- 2: Gebäudewand
- 3: Blende
- 4: Blende
- 5: Blende
- 6: Rückwand
- 7: Struktur
- 8: Strukturelement
- 9: Oberfläche
- 10: Lichtquelle
- 11: Lichtleiteinrichtung
- 12: Unterkante
- 13: Lichtleitrichtung
- 14: Lichtleitrichtung
- 15: lichtemittierende Diode
- 16: Abschnitt
- 17: Abschnitt
- 18: Oberfläche

- b: Breite
- d: Dicke
- b: Breite

## Patentansprüche

1. Dunstabzugshaube (1) mit einer Blende (3), welche eine Struktur (7) aufweist, und mit einer Lichtquelle (10), wobei Licht der Lichtquelle (10) in die Blende (3) einkoppelbar und über die Struktur (7) aus der Blende (3) auskoppelbar ist, **dadurch gekennzeichnet, dass** die Anzahl von Strukturelementen (8) der Struktur (7) pro Volumeneinheit des Materials der Blende (3) so variiert, dass ein Dichtegradient der Strukturelemente (8) vorgesehen ist, wobei die Dichte der Strukturelemente (8) von einem Einleitpunkt des Lichts in die Blende (3) hin zu einem Ausleitpunkt des Lichts aus der Blende (3) zunimmt, und wobei die Lichtquelle (10) mit Hilfe eines abschnittsweisen Ein- oder Ausschaltens geeignet ist, je nach einem Betriebszustand der Dunstabzugshaube (1) die Struktur (7) lediglich abschnittsweise zu beleuchten.

2. Dunstabzugshaube (1) nach Anspruch 1, **dadurch gekennzeichnet, dass** die Blende (3) eine Frontplatte der Dunstabzugshaube (1) ist.

3. Dunstabzugshaube (1) nach Anspruch 1 oder 2, **dadurch gekennzeichnet, dass** die Blende (3) eine Glasplatte ist.

4. Dunstabzugshaube (1) nach einem der Ansprüche 1 bis 3, **dadurch gekennzeichnet, dass** die Struktur (7) eine Lasergravur ist.

5. Dunstabzugshaube (1) nach einem der Ansprüche 1 bis 4, **dadurch gekennzeichnet, dass** die Struktur (7) eine Kugelstruktur ist.

6. Dunstabzugshaube (1) nach Anspruch 5, **dadurch gekennzeichnet, dass** die Kugelstruktur unterschiedlich große Kugeln (8) aufweist.

7. Dunstabzugshaube (1) nach einem der Ansprüche 1 bis 6, **dadurch gekennzeichnet, dass** die Struktur (7) in der Blende (3) angeordnet ist.

8. Dunstabzugshaube (1) nach einem der Ansprüche 1 bis 7, dass das Licht der Lichtquelle (10) über eine Kante (12) der Blende (3) in diese einkoppelbar ist.

9. Dunstabzugshaube (1) nach Anspruch 8, **dadurch gekennzeichnet, dass** die Dunstabzugshaube (1) zum Einkoppeln des Lichts der Lichtquelle (10) in die Blende (3) eine Lichtleiteinrichtung (11) aufweist.

10. Dunstabzugshaube (1) nach einem der Ansprüche 1 bis 9, **dadurch gekennzeichnet, dass** die Lichtquelle (10) zumindest eine lichtemittierende Diode (15) aufweist.

11. Dunstabzugshaube (1) nach einem der Ansprüche 1 bis 10, **dadurch gekennzeichnet, dass** die Lichtquelle (10) dimmbar ist.

12. Dunstabzugshaube (1) nach einem der Ansprüche 1 bis 11, **dadurch gekennzeichnet, dass** eine Lichtfarbe der Lichtquelle (10) veränderbar ist.

## Claims

1. Extractor hood (1) with a panel (3), which has a structure (7), and with a light source (10), wherein light of the light source (10) is able to be coupled into the panel (3) and coupled out of the panel (3) via the structure (7), **characterised in that** the number of structure elements (8) of the structure (7) per volume unit of the material of the panel (3) varies such that a density gradient of the structure elements (8) is provided, wherein the density of the structure elements (8) increases from an injection point of the light into the panel (3) up to a release point of the light out from the panel (3), and wherein the light source (10), with the aid of being switched on or off in sections, is suitable for illuminating the structure (7) only in sections, depending on an operating state of the extractor hood (1).

2. Extractor hood (1) according to claim 1, **characterised in that** the panel (3) is a front plate of the extractor hood (1).

3. Extractor hood (1) according to claim 1 or 2, **characterised in that** the panel (3) is a glass plate.

4. Extractor hood (1) according to one of claims 1 to 3, **characterised in that** the structure (7) is a laser engraving.

5. Extractor hood (1) according to one of claims 1 to 4, **characterised in that** the structure (7) is a spherical structure.

6. Extractor hood (1) according to claim 5, **characterised in that** the spherical structure has differently sized spheres (8).

7. Extractor hood (1) according to one of claims 1 to 6, **characterised in that** the structure (7) is arranged in the panel (3).

8. Extractor hood (1) according to one of claims 1 to 7, that the light of the light source (10) is able to be coupled via an edge (12) of the panel (3) into said panel (3).

9. Extractor hood (1) according to claim 8, **characterised in that** the extractor hood (1) has a light-guiding device (11) for coupling the light of the light source (10) into the panel (3).

10. Extractor hood (1) according to one of claims 1 to 9, **characterised in that** the light source (10) has at least one light-emitting diode (15).

11. Extractor hood (1) according to one of claims 1 to 10, **characterised in that** the light source (10) is dimmable.

12. Extractor hood (1) according to one of claims 1 to 11, **characterised in that** it is possible to modify a light colour of the light source (10).

## Revendications

1. Hotte aspirante (1) avec un panneau (3), lequel comprend une structure (7), et avec une source lumineuse (10), la lumière de la source lumineuse (10) pouvant se connecter dans le panneau (3) et pouvant être déconnectée du panneau (3) par le biais de la structure (7), **caractérisée en ce que** le nombre d'éléments structurels (8) de la structure (7) par unité de volume de la matière du panneau (3) varie de manière qu'un gradient de densité des éléments structurels (8) est prévu, la densité des éléments structurels (8) augmentant d'un point d'introduction de la lumière dans le panneau (3) jusqu'à un point de sortie de la lumière hors du panneau (3), et la source lumineuse (10) étant propre à éclairer la structure (7) uniquement par section, à l'aide d'un allumage ou extinction sectionnels, en fonction de l'état de fonctionnement de la hotte (1).

2. Hotte aspirante (1) selon la revendication 1, **caractérisée en ce que** le panneau (3) est la plaque frontale de la hotte (1).

3. Hotte aspirante (1) selon la revendication 1 ou 2, **caractérisée en ce que** le panneau (3) est une plaque de verre.

4. Hotte aspirante (1) selon l'une des revendications 1 à 3, **caractérisée en ce que** la structure (7) est une gravure laser.

5. Hotte aspirante (1) selon l'une des revendications 1 à 4, **caractérisée en ce que** la structure (7) est une structure à billes.

6. Hotte aspirante (1) selon la revendication 5, **caractérisée en ce que** la structure à billes comprend des billes de tailles différentes (8).

7. Hotte aspirante (1) selon l'une des revendications 1 à 6, **caractérisée en ce que** la structure (7) est disposée dans le panneau (3).

8. Hotte aspirante (1) selon l'une des revendications 1 à 7, **caractérisée en ce que** la lumière de la source lumineuse (10) peut être connectée dans celle-ci par un bord (12) du panneau (3).

9. Hotte aspirante (1) selon la revendication 8, **caractérisée en ce que** la hotte aspirante (1) comprend, pour la connexion de la lumière de la source lumineuse (10) dans le panneau (3), un dispositif à fibres optiques (11).

10. Hotte aspirante (1) selon l'une des revendications 1 à 9, **caractérisée en ce que** la source lumineuse (10) comprend au moins une diode électroluminescente (15).

11. Hotte aspirante (1) selon l'une des revendications 1 à 10, **caractérisée en ce que** la source lumineuse (10) est à intensité variable.

12. Hotte aspirante (1) selon l'une des revendications 1 à 11, **caractérisée en ce que** la couleur de la lumière de la source lumineuse (10) peut être modifiée.
